(19) Europäisches Patentamt
European Patent Office
Office européen des brevets

(11) EP 4 749 987 A1

(12) EUROPEAN PATENT APPLICATION

(43) Date of publication:
27.05.2026 Bulletin 2026/22

(21) Application number: 24215017.5

(22) Date of filing: 25.11.2024

(51) International Patent Classification (IPC):
*H04L 9/08* (2006.01)

(52) Cooperative Patent Classification (CPC):
H04L 9/0855

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicants:
• Deutsche Telekom AG
53113 Bonn (DE)
• Technische Universität München
80333 München (DE)

(72) Inventors:
• GEITZ, Marc
58089 Hagen (DE)

• NÖTZEL, Janis
81829 München (DE)
• LI CALSI, Davide
81829 München (DE)
• CHAUDHARY, Sumit
81247 München (DE)
• CHOI, Hyeock
80799 München (DE)

(74) Representative: 2SPL Patentanwälte PartG mbB
Landaubogen 3
81373 München (DE)

Remarks:
Amended claims in accordance with Rule 137(2)
EPC.

(54) **NETWORK NODE AND COMMUNICATION NETWORK**

(57) Provided is a first network node communicating in a sequence of network nodes in a network. The first network node comprises circuitry configured to generate a first cryptographic context with a second network node in the sequence. The circuitry is further configured to generate a second cryptographic context with a third network node in the sequence. With respect to the first network node, a directly neighboring network node has access to at most one of the first and the second cryptographic contexts.

Fig. 1

## Description

### Field

The present disclosure relates to a network node, a communication network, methods, and a computer program for securely forwarding a secret message among different nodes.

### Background

Quantum key distribution (QKD) may relate to a technology in which two participants (Alice and Bob) carry out a key exchange based on quantum mechanical principles. For example, Twin-Field (TF) or measurement device independent (MDI) QKD may use a third untrusted node (Charly) to exchange random numbers that may be used as encryption keys. In TF QKD, Alice and Bob may act as senders of weak optical signals, which may be brought into superposition at Charly's location. Charly may perform a measurement, based on which Alice and Bob may be able to reconstruct a common cryptographic key. Charly himself may be unable to learn anything about the key. In MDI QKD, instead of weak optical signals, single photons (or single photon quantum states) may be used which may be brought into superposition by Charly.

For performing QKD, different devices may be needed, such as single photon detectors, fiber optics, single photon sources or weak/attenuated laser sources, monitoring equipment are seen as state-of-the-art technology, and the like.

Generally, for cryptographic applications, key management systems may be used to manage the exchanged encryption keys and encryptors/applications may be used to encrypt payload data. An integration of QKD systems via KMS to a Layer1 encryption in optical transport networks may be employed, for example.

There may be a demand for an improved key forwarding scheme, e.g., for QKD systems.

### Summary

This demand may be satisfied by the subject-matter of the independent claims. Further embodiments or examples are given by the dependent claims, the drawings, and the following description.

The present disclosure is based on the finding that a message (or key) forwarding scheme among a plurality of nodes may be made more secure when the message is encrypted based on multiple (at least two) cryptographic contexts (e.g., keys) while none of the forwarding nodes (except the sender node (Alice) and the receiver node (Bob)) is able to decrypt the message since it does not know all of the cryptographic contexts.

The following description is made in view of, a "first network node" is mentioned. It should be noted that the principles of the present disclosure may be applied to any network node in a chain of network nodes for forwarding the message.

For example, the first network node may be a sender of the (original) message, Alice. In such a case, the second network node may be a directly neighboring network node and the third network node may be an indirectly neighboring network node, and Alice may generate a mutual key with each one of these two network nodes.

In another example, the first network node may be an intended receiver of the message, Bob. In such a case, the second network node may be a directly neighboring network node and the third network node may be an indirectly neighboring network node, and Alice may generate a mutual key with each one of these two network nodes.

In another example, the first network node may be an "edge" network node (i.e., a first or a last network node in the chain/sequence of network nodes) that is supposed to forward the message (i.e., neither Alice nor Bob). In such a case, the second network node may be Alice or Bob (i.e., a directly neighboring network node) and the third network node may be an indirectly neighboring network node. The edge network node may generate a mutual key with each one of these two network nodes, but it may be unable to completely decrypt the message since it may be unaware of all the relevant cryptographic contexts with which the message is decrypted. It may only be aware of one cryptographic context with which the message is decrypted. Also, a directly neighboring network node may only be aware of at most one cryptographic context of the first network node, which is a general principle of the present disclosure and applicable to all network nodes.

In another example, the first network node may be an "intermediate" network node (i.e., some network node that is neither Alice nor Bob nor an edge network node). In such a case, both the first and the second network node may only be indirect neighbors of the intermediate network node.

According to a first aspect, the disclosure provides a first network node communicating in a sequence of network nodes in a network. The first network node comprises circuitry configured to generate a first cryptographic context with a second network node in the sequence. The circuitry is further configured to generate a second cryptographic context with a third network node in the sequence. With respect to the first network node, a directly neighboring network node has access to at most one of the first and the second cryptographic contexts.

Thereby, a key forwarding scheme may be provided to forward a key over distances that are longer than a usual transport distance of optical fiber. Furthermore, apart from Alice and Bob, none of the intermediate node may have access to all the cryptographic contexts to decrypt the message. Only when two or more nodes are compromised, the message might be corrupted.

In a first example of the first aspect, at least one of the first and the second cryptographic contexts is generated based on relay-assisted quantum key distribution.

Thereby, the proposed scheme may be applied to QKD.

In a second example of the first aspect, the circuitry is further configured to generate a message and encrypt the message based on the first cryptographic context and the second cryptographic context, and to communicate the encrypted message to the second network node.

Thereby, the scheme may be applied to the generator of the message (Alice).

In a third example of the first aspect, the first cryptographic context is based on a point-to-point quantum key distribution with the second network node, and the second cryptographic context is based on a relay-assisted quantum key distribution with the third network node.

Thereby, a secure transmission from Alice to the first intermediate node may be possible since relay-assisted QKD may only protect over a span of two intermediate nodes.

In a fourth examples of the first aspect, for generating the second cryptographic context, the second network node serves as a relay for the relay-assisted quantum key distribution between the first network node and the third network node.

Thereby, a relay-assisted QKD may be provided.

In a fifth example of the first aspect, the second network node is a direct neighbor of the first network node, and the third network node is an indirect neighbor of the first network node and a direct neighbor of the second network node.

Thereby, neither the second nor the third network node knows both the first and the second cryptographic contexts.

In a sixth example of the first aspect, the second network node is a direct neighbor of the first network node, and the third network node is an indirect neighbor of the first network node and of the second network node.

Thereby, security may be further improved.

In a seventh example of the first aspect, the circuitry is further configured to receive, from the second network node, a message that is encrypted based on the first cryptographic context and the second cryptographic context. In such examples, the circuitry is further configured to decrypt the message based on the first cryptographic context and the second cryptographic context.

Thereby, a receiver (Bob) of the message may be able to decrypt the message without an intermediate node having had access to the plaintext of the message.

In an eighth example of the first aspect, the first cryptographic context is based on a point-to-point quantum key distribution with the second network node. In such an example, the second cryptographic context is based on a relay-assisted quantum key distribution with the third network node in the sequence.

Thereby, for forwarding by an intermediate node to another intermediate node (i.e., a node different from Alice and Bob, which are end nodes), only relay-assisted QKD may be necessary and not P2P QKD, which may further improve security.

In a ninth example of the first aspect, for generating the second cryptographic context, the second network node serves as a relay for the relay-assisted quantum key distribution between the first network node and the third network node.

Thereby, relay-assisted QKD may be provided.

In a tenth example of the first aspect, the circuitry is further configured to receive, from the second network node, an encrypted message that is encrypted based on the first cryptographic context and based on a further cryptographic context. The first cryptographic context is based on a point-to-point quantum key distribution between the first network node and the second network node. The second cryptographic context is based on a relay-assisted quantum key distribution with the third network node. In such an example, the third network node is an indirect neighbor of the first network node.

Thereby, similar effects as stated above may be achieved.

In an eleventh example of the first aspect, the circuitry is further configured to decrypt the encrypted message only based on the first cryptographic context to obtain the message encrypted based on the further cryptographic context. The circuitry is further configured to re-encrypt the message based on the second cryptographic context to obtain the encrypted message based on the second cryptographic context and the further cryptographic context.

Thereby, an intermediate node may be unable to completely decrypt the message, but only partially decrypt it for re-encrypting and forwarding.

In a twelfth example of the first aspect, the second network node is a direct neighbor of the first network node, and the third network node is an indirect neighbor of the first network node.

Thereby, similar effects as stated above may be achieved.

In a thirteenth example of the first aspect, the circuitry is further configured to receive, from a fourth network node, an encrypted message that is encrypted based on the first cryptographic context and based on a further cryptographic context. The first cryptographic context is based on a relay-assisted quantum key distribution with the second network node. The second cryptographic context is based on a relay-assisted quantum key distribution with the third network node.

Thereby, similar effects as stated above may be achieved.

In a fourteenth example of the first aspect, the circuitry is further configured to decrypt the encrypted message only based on the first cryptographic context to obtain the message encrypted based on the further cryptographic context. The circuitry is further configured to re-encrypt the message based on the second cryptographic context to obtain the encrypted message based on the second cryptographic context and the further cryptographic context.

Thereby, similar effects as stated above may be achieved.

In a fifteenth example of the first aspect, the fourth network node serves as a relay for the relay-assisted quantum key distribution between the first network node and the second network node.

Thereby, similar effects as stated above may be achieved.

In a sixteenth example, the fourth network node is a direct neighbor to the first network node, and the third network node is an indirect neighbor of the first network node.

Thereby, similar effects as stated above may be achieved.

According to a second aspect, the disclosure provides a communication network comprising a network node according to any one of the second to sixth example of the first aspect, a network node according to any one of the tenth to twelfth example of the first aspect, a network node according to any one of the thirteenth to sixteenth example of the first aspect, and a network node according to any one of the seventh to ninth example of the first aspect.

Thereby, a network for a secure key forwarding scheme may be provided.

In a first example of the second aspect, the network node according to any one of the second to sixth example of the first aspect is configured to transmit the encrypted message to the network node according to any one of the tenth to twelfth example of the first aspect. The network node according to any one of the tenth to twelfth example of the first aspect is configured to forward its re-encrypted message to the network node according to any one of the thirteenth to sixteenth example of the first aspect. The network node according to any one of the thirteenth to sixteenth example of the first aspect is configured to forwards its re-encrypted message to the network node according to any one of the seventh to ninth example of the first aspect.

Thereby, secure key forwarding may be provided.

In a second example of the second aspect the communication network node according to any one of the second to sixth example of the first aspect is connected to at least two directly neighboring nodes according to any one of the tenth to twelfth example of the first aspect, thereby providing at least two paths to communicate the message to the network node according to any one of the seventh to ninth example of the first aspect.

Thereby, multiple paths may be provided which may further enhance security.

According to a third aspect, the disclosure provides a method for a first network node communicating in a sequence of network nodes in a network. The method comprises generating a first cryptographic context with a second network node in the sequence. The method further comprises generating a second cryptographic context with a third network node in the sequence. With respect to the first network node, a directly neighboring network node has access to at most one of the first and the second cryptographic contexts.

Thereby, similar effects may be achieved as in the case of the first and second aspects.

According to a fourth aspect, the disclosure provides a method for a communication network. The communication network comprises a network node according to any one of the second to sixth example of the first aspect, a network node according to any one of the tenth to twelfth example of the first aspect, a network node according to any one of the thirteenth to sixteenth example of the first aspect, and a network node according to any one of the seventh to ninth example of the first aspect. The method comprises transmitting the encrypted message from the network node according to any one of the second to sixth example of the first aspect to the network node according to any one of the tenth to twelfth example of the first aspect. The method further comprises forwarding the re-encrypted message of the network node according to any one of the tenth to twelfth example of the first aspect to the network node according to any one of the thirteenth to sixteenth example of the first aspect. The method further comprises forwarding the re-encrypted message of the network node according to any one of the thirteenth to sixteenth example of the first aspect to the network node according to any one of the seventh to ninth example of the first aspect.

Thereby, similar effects may be achieved as in the case of the first and second aspects.

According to a fifth aspect, the disclosure provides a computer program comprising instructions which, when the program is executed by a computer, cause the computer to carry out the method of the third aspect or the fourth aspect (or both).

Thereby, similar effects may be achieved as in the case of the first and second aspects.

## Brief description of the Figures

Some examples of apparatuses and/or methods will be described in the following by way of example only, and with reference to the accompanying figures, in which

Fig. 1 depicts a network according to the present disclosure;

Fig. 2 depicts a block diagram for a TF/MDI QKD network according to the present disclosure;

Fig. 3 depicts a key forwarding scheme according to the present disclosure;

Fig. 4 depicts a technical component view of the network of Fig. 1;

Fig. 5 depicts a further key forwarding scheme according to the present disclosure;

Fig. 6 depicts a communication network with different parallel paths;

Fig. 7 depicts a block diagram of a method for a network node according to the present disclosure;

Fig. 8 depicts a block diagram of a method for a communication network according to the present disclosure; and

Fig. 9 results of the present disclosure are depicted in comparison to P2P QKD and TF QKD.

## Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

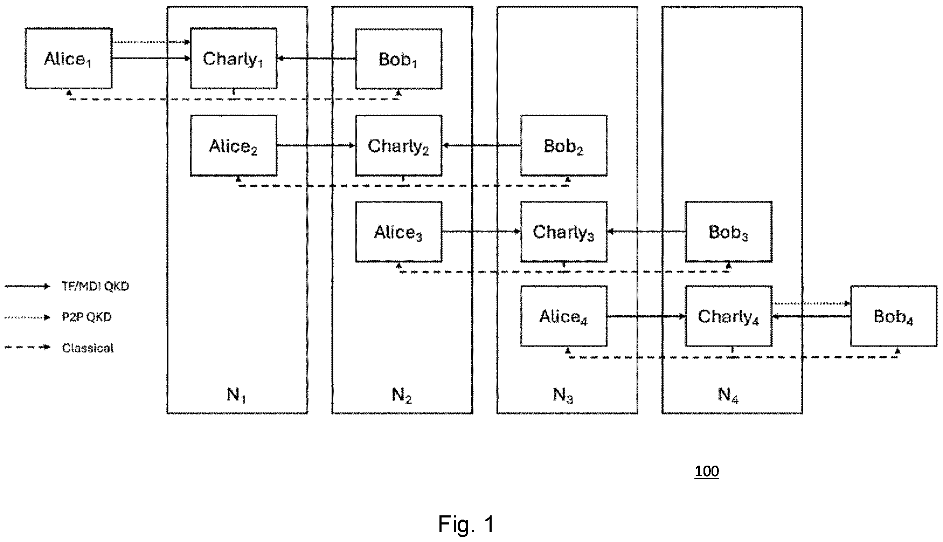

Fig. 1 depicts a (communication) network 100 comprising a plurality of network nodes. Although the embodiments of Figs. 1 to 7 are primarily described with respect to a quantum key distribution (QKD) scheme, the present disclosure is not limited in that regard since it may be sufficient to provide a key forwarding scheme as described in the following based on different cryptographic contexts. In such a key forwarding scheme (or in more general: a message forwarding scheme) according to the present disclosure, different network nodes may be utilized to forward a (secret) key (or a message) to a recipient of the key (or the message) to carry out an encrypted communication between the generator and the recipient of the key. In the following, the generator of the key is referred to as "Alice" and the recipient is referred to as "Bob". If a third node is involved in generating a key (e.g., for twin-field QKD), this node is referred to as "Charly". According to the present disclosure, when the nodes of the network are used to forward the key, the key forwarding scheme may be based on the principle that the key is encrypted based on two different cryptographic contexts (e.g., keys) and, with respect to a first network node, a directly neighboring node may only be aware of (or has access to) at most one of the two cryptographic contexts. Thereby, the directly neighboring network node may decrypt the twice encrypted key based on a first cryptographic context (that the directly neighboring network node has access to), and re-encrypt the key based on a third cryptographic context, such that the key is again encrypted twice and forwarded to the next neighboring network node.

The following description is given in view of a "first network node". However, any node shown in Fig. 1 may serve as the first network node, as will be apparent from the following description. The first network node communicates in a sequence of network nodes in the network 100. The sequence of network nodes may be established for the key forwarding scheme, i.e., one node receives the encrypted key after the other, but this shall not exclude that a node communicates with any other node, e.g., with a non-directly neighboring network node in the sequence, but the key may be forwarded in a sequential manner.

The network may be any type of network, such as a communication network, as depicted in Fig. 1. Also, any network architecture may be used, such as a linear architecture, as depicted in Fig. 1, but also a circular (or ring-like) architecture, a star architecture, and the like may be employed, as long as the principles of the present disclosure may be applicable to the network architecture. For example, the network may be a mobile telecommunications network, a corporate/company/factory network, a private network, and the like. The network may be a distributed network which may need several nodes to (safely) forward a key since, according to the present disclosure, it may be possible to safely forward a key over a multitude of nodes in cases where this previously was not possible or less secure, such as in a QKD network.

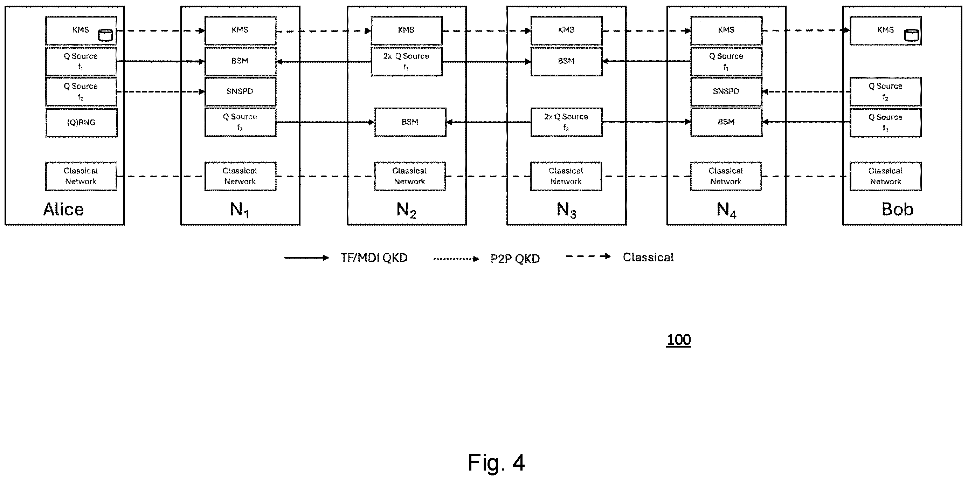

The first network node may include circuitry that carries out the principles of the present disclosure. The circuitry may include anything that allows for generating a cryptographic context. For example, if quantum cryptography is to be applied, circuitry that is specific for quantum cryptography may be utilized. For example, a quantum source, Bell state measurement circuitry, (single) photon detectors, and the like may be used, as will be discussed under reference of Fig. 4. On the other hand, if "classical" (i.e., non-quantum based) cryptography is used, the circuitry may include means for processing, which may be implemented using one or more processing units, one or more processing devices, any means for processing, such as a processor, a computer or a programmable hardware component being operable with accordingly adapted software. The processing circuitry may, for example, be implemented in software, which is then executed on one or more programmable hardware components. Such hardware components may comprise a general-purpose processor, a Digital Signal Processor (DSP), a micro-controller, a central processing unit (CPU), a graphics processing unit (GPU), or the like. It should be noted that also for a QKD scheme, "classical" components may be used, such as a processor for generating signals, for controlling the quantum-related circuitry, to evaluate signals, and the like. Furthermore, apart from quantum communication channels, classical communication channels may exist between the nodes, as depicted in Fig. 1 (dashed line).

Each node (or the "first node", as discussed above) is configured to generate a first cryptographic context with another node and a second cryptographic context with yet another node. Or, in other words, the processing circuitry is configured to generate a first cryptographic context with a second network node in a sequence, and further configured to generate a second cryptographic context with a third network node in the sequence.

A cryptographic context may relate to a cryptographic way in which two network nodes communicate with each other, such as a key, a key and a message, or the like. However, the cryptographic context does not need to be directly a key, but may indicate a key. For example, in twin-field QKD, a signal that is determined by the entities participating in the key generation may only indicate the key, such that the participants may derive the key from the signal. In such an example, the cryptographic context may be the signal, as will be discussed below.

As already discussed above, with respect to the first network node, a directly neighboring network node has access to at most one (i.e., zero or one) of the first and the second cryptographic contexts.

With respect to Fig. 1, if the node Alice1 is the first network node, Alice1 is configured to generate the first cryptographic context with the node N1 (i.e., its directly neighboring node), and the second cryptographic context with the node N2 (i.e., its indirectly neighboring node). In other words, in some examples, the second network node may be a direct neighbor of the first network node, and the third network node may be an indirect neighbor of the first network node and a direct neighbor of the second network node.

If a QKD scheme is used, as depicted in Fig. 1, Alice1 may perform point-to-point (P2P) QKD with the node N1. P2P QKD may enable two parties to establish a shared secret key through the transmission of quantum particles, e.g., photons, over a quantum channel. Alice1 may encode information into the quantum states of these photons, e.g., using properties like polarization, which may represent binary values (or other values since there may be several forms of polarization). As Alice1 sends the quantum particles to N1, the quantum states may remain delicate and highly sensitive to any observation or interception. N1 may receive the photons and measures them using chosen settings, some of which align with Alice1's setting, while others may not, thereby resulting in a partially matched set of bits. Afterwards, Alice1 and N1 may communicate over a public channel to identify which settings aligned and retain only the matching bits. Furthermore, error correction and privacy amplification may be performed to secure the final key. In this way, any attempt at eavesdropping would disturb the quantum states, alerting Alice and Bob to the presence of an interceptor, allowing them to verify the integrity of their shared key. However, if one of the two nodes participating in P2P QKD is compromised, the secret may not be safe.

As indicated above, a quantum channel may be used. A quantum channel may relate to a medium through which quantum information (e.g., in the form of quantum states) is transmitted. Unlike classical channels that carry conventional binary data, a quantum channel may be specifically designed to preserve the quantum properties of particles, such as superposition, entanglement, polarization, and the like, which may be essential for secure quantum communication methods like QKD. The quantum channel may be a physical fiber optic cable for photons or even free space, where photons travel through the air or vacuum. However, it may require extreme precision, as any noise or loss in the channel may disturb the quantum states, affecting the integrity of the transmitted information. Since quantum states may be highly sensitive, any interception or observation along the quantum channel may cause measurable disturbances, allowing for detection of potential eavesdroppers.

Furthermore, Alice1 may perform relay-assisted QKD (e.g., twin-field (TF) or measurement-device independent (MDI) QKD) with N2 (which may act as Bob1 for generation of the second cryptographic context), via N1 (which may act as Charly1 for generation of the second cryptographic context). TF QKD and MDI QKD may be based on similar principles. While TF QKD may rely on light waves, MDI QKD may rely on detection of single photons. To such schemes, it may also be referred to as relay-assisted QKD, in some examples. It should be noted that apart from TF QKD and MDI QKD, other types of relay-assisted QKD may be applied according to the present disclosure. It should be noted that the present disclosure is not limited to any QKD scheme. For example, additionally or alternatively one or more of CV (continuous variable) QKD (using weak coherent laser beams), squeezed light QKD (using squeezed state), or the like may be adopted.

In more detail, in TF QKD, the end nodes (Alice1 and Bob1 in this example) may communicate via a third untrusted node (Charly1 in this example) to exchange random numbers that can may then be used as encryption keys. In TF-QKD, Alice1 and Bob1 may act as senders of weak optical signals, which may be brought into superposition at Charly1's location and Charly1 may perform a measurement and generate an interference pattern. Based on the interference pattern Alice1 and Bob1 may be able to reconstruct a common cryptographic key since the knowledge of their own signal and the knowledge of the interference pattern may indicate what the signal of the respective other looks like. Charly1 himself may be unable to learn anything about the key since Charly1 may not know which signals Alice1 and Bob1 send - only the interference pattern. In other words, for generating the second cryptographic context, the second network node (i.e., Charly1 in this example) may serve as a relay for the relay-assisted quantum key distribution between the first network node and the third network node.

On the other hand, in MDI QKD, single photons may be sent by Alice1 and Bob1 to Charly1 which may bring them into superposition in a similar fashion as in TF QKD. In such a scenario, Charly1 may use (a) single photon detector(s) and Charly1 may communicate an output of the single photon detector(s) to Alice1 and Bob1 who may then reconstruct what the respective other sent. For example, Charly1 may perform a Bell state measurement (but the present disclosure is not limited in that regard), if the single photons are entangled. If a Bell state projection of the two entangled photons sent by Alice and Bob is detected by Charly, Charly may send this information to Alice and Bob which in turn may qualify these photons as candidates for the key bits.

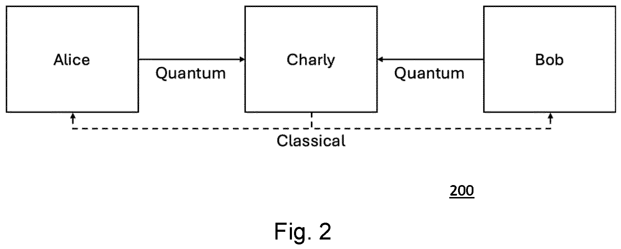

A setup for relay-assisted QKD is shown in Fig. 2. Fig. 2 depicts a block diagram for a TF/MDI QKD network 200 according to the present disclosure. As indicated above, Alice and Bob send quantum signals to Charly via a quantum channel. Moreover, the three nodes are connected via a classical (sifting) channel. As described above, Charly may be unaware of the key that Alice and Bob negotiate although Charly performs the measurement.

Hence, in this example where Alice1 is the first network node, N1 is the directly neighboring network node. However, N1 only has access to the first cryptographic context that is established based on P2P QKD with Alice1, but has no access to the second cryptographic context that is generated based on TF/MDI QKD between Alice1 and Bob1.

In some examples (e.g., if Alice1 is the first network node), the circuitry may be further configured to generate a message and encrypt the message based on the first cryptographic context and the second cryptographic context. For example, the message may be a key to be delivered to Bob4, but the principles of the present disclosure may be applicable to any type of message.

The circuitry may be further configured to communicate the encrypted message to the second network node (i.e., N1, in this example).

In another example, where N1 is the first network node, a first cryptographic context may be established/generated with Alice1 based on P2P QKD, as discussed above. A second cryptographic context may be established/generated with N3 (that acts as Bob2, in this example, while N1 acts as Alice2) based on TF/MDI QKD. In this example, Alice1 is a directly neighboring node to N1 and N2 is another directly neighboring node to N1. Alice1 only has access to the first cryptographic context, while N2 has access to none of the two cryptographic contexts. In more general terms, in such examples where N1 is the first network node, the second network node may be a direct neighbor of the first network node, and the third network node may be an indirect neighbor of the first network node.

In such examples where N1 is the first network node, the circuitry may be further configured to receive, from the second network (e.g., Alice1) node, an encrypted message that is encrypted based on the first cryptographic context and based on a further cryptographic context. In other words, as discussed above, the first cryptographic context may be based on a point-to-point quantum key distribution between the first network node and the second network node. Moreover, the second cryptographic context may be based on a relay-assisted quantum key distribution with the third network node, wherein the third network node is an indirect neighbor of the first network node.

In such examples where N1 is the first network node, the circuitry may be further configured to decrypt the encrypted message only based on the first cryptographic context to obtain the message encrypted based on the further cryptographic context. The circuitry may further be configured to re-encrypt the message based on the second cryptographic context (with respect to N1) to obtain the encrypted message based on the second cryptographic context and the further cryptographic context.

In another example, where N2 is the first network node, a first cryptographic context may be established/generated with Alice1 based on TF/MDI QKD, as discussed above. A second cryptographic context may be established/generated with N4 (that acts as Bob3, in this example, while N2 acts as Alice3) based on TF/MDI QKD. In this example, N1 is a directly neighboring node to N2 and N3 is another directly neighboring node to N2. Neither N1 nor N3 may have access to any of the first and the second cryptographic contexts (with respect to N2). However, N1 may serve as Charly1 (as a relay) for the TF/MDI QKD (relay-assisted QKD) with Alice1, and N3 may serve as Charly3 (as a relay) for the TF/MDI QKD (relay-assisted QKD) with N4.

Also, in such an example where N2 is the first network node, the encrypted message may be received from N1 (as a "fourth" network node and a direct neighbor) and forwarded (after partial encryption and re-encryption) to N3. In other words, the circuitry may be further configured to receive, from a fourth network node (N1 in this case), an encrypted message that is encrypted based on the first cryptographic context (between Alice1 and N2) and based on a further cryptographic context (between N1 and N3). As discussed above, the cryptographic context may be based on a relay-assisted quantum key distribution with the second network node (Alice1), and the second cryptographic context may be based on a relay-assisted quantum key distribution with the third network node (N4/Charly4 in this example, which may be an indirect neighbor). In such examples, the circuitry may be further configured to decrypt the encrypted message only based on the first cryptographic context to obtain the message encrypted based on the further cryptographic context. The circuitry may be further configured to re-encrypt the message based on the second cryptographic context to obtain the encrypted message based on the second cryptographic context and the further cryptographic context.

In another example, where N3 is the first network node, a first cryptographic context may be established/generated with N1 based on TF/MDI QKD, as discussed above. A second cryptographic context may be established/generated with Bob4 based on TF/MDI QKD. In this example, N2 is a directly neighboring node to N3 and N4 is another directly neighboring node to N3. Neither N2 nor N4 may have access to any of the first and the second cryptographic contexts. However, N2 may serve as Charly2 (as a relay) for the TF/MDI QKD (relay-assisted QKD) with N1, and N4 may serve as Charly4 (as a relay) for the TF/MDI QKD (relay-assisted QKD) with Bob4. If N3 is the first network node, it may be similar as the case where N2 is the first network node, such that it is referred to the explanations made for N2.

In another example, where N4 is the first network node, a first cryptographic context may be established/generated with N2 based on TF/MDI QKD, as discussed above. A second cryptographic context may be established/generated with Bob4 based on P2P QKD. In this example, Bob4 is a directly neighboring node to N4 and N3 is another directly neighboring node to N4. Bob4 may only have access to the second cryptographic context (established based on P2P QKD), while N3 may not have access to any of the first and the second cryptographic contexts, but N3 may serve as a relay for establishing the first cryptographic context. N4 may receive the encrypted message from N3, (partially) decrypt it based on the first cryptographic context, and re-encrypt it based on the second cryptographic context to forward it to Bob4.

In another example, where Bob4 is the first network node, a first cryptographic context may be established/generated with N3 (as a relay) based on TF/MDI QKD, as discussed above.

A second cryptographic context may be established/generated with N4 based on P2P QKD. In this example, Bob4 may only have one directly neighboring that is N4. However, N4 may only have access to the second cryptographic context (established based on P2P QKD), but may serve as a relay for establishing the first cryptographic context between N3 and Bob4. Bob4 may receive the encrypted message from N4, and Bob4 has access to both cryptographic context, Bob4 may be able to decrypt the message. In other words, the circuitry may be configured to receive, from the second network node (N4 in this example), a message that is encrypted based on the first cryptographic context (between N3 and Bob4) and the second cryptographic context (between N4 and Bob4). The circuitry may be further configured to decrypt the message based on the first cryptographic context and the second cryptographic context.

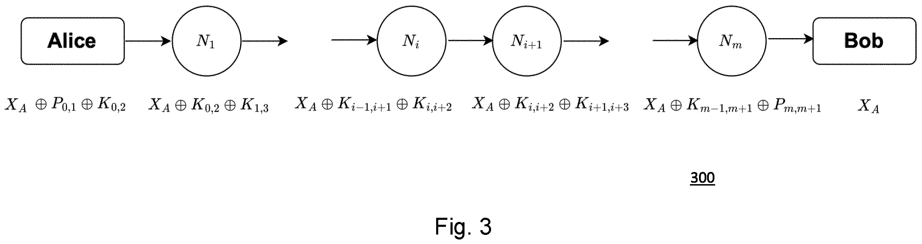

Fig. 3 depicts a key forwarding scheme 300 according to the present disclosure for an arbitrary number of nodes. A generator (Alice) of a message $X_A$ encrypts the message $X_A$ based on two cryptographic contexts (keys, in this example): $P_{0,1}$ and $K_{0,2}$. The indices of the keys refer to the nodes between which the key has been generated. Furthermore, a key named $P_{i,\,+1}$ relates to a key generated based on P2P QKD between a node and a (directly) neighboring node. On the other hand, and a key named $K_{i,i+j}$ relates to a key that is generated based on relay-assisted QKD between a node i and an indirectly neighboring node that is set j nodes apart from node I (e.g., j may be equal to or larger than two). Accordingly, for the first message generated by Alice, $P_{0,1}$ relates to a key that is generated between Alice and N1 based on P2P QKD (Alice has the index 0), and $K_{0,2}$ relates to a key that is generated between Alice and N2 based on TF/MDI QKD (with N1 as a relay).

Accordingly, Alice sends the message $X_A \oplus P_{0,1} \oplus K_{0,2}$ to N1. N1 removes the key $P_{0,1}$ from the message (e.g., based on XORing the message with $P_{0,1}$), and adds the key $K_{1,3}$ (i.e., re-encrypt the message with $K_{1,3}$) for sending the newly encrypted message to N2. An arbitrary node in sequence Ni generates the message $X_A \oplus K_{i-1,i+1} \oplus K_{i,i+2}$ and sends it to node Ni+1, which generates the message $X_A \oplus K_{i,i+2} \oplus K_{i+1,i+3}$. A penultimate node Nm (i.e., a node directly neighboring Bob) generates the message $X_A \oplus K_{m-1,m+1} \oplus P_{m,m+1}$ and sends it to Bob (who has the index m+1).

A more mathematical description of Fig. 3 is given in the following: Assume Alice and Bob are connected with m intermediary nodes Ni for $1 \leq i \leq m$. Alice may be denoted $N_0$ and Bob $N_{m+1}$. For $0 \leq i \leq m -1$, each $N_i$ is directly connected with $N_{i+1}$ and, with its help, can perform TF/MDI QKD with $N_{i+1}$ to share a secret key $K_{i,i+2}$. With the following scheme, Alice and Bob may be able to share a secret without revealing it to the intermediary nodes $N_i$. All intermediate secret keys may be of length n and may belong to $\{0,1\}^n$. Although the following description is given with respect to "steps", the order of the steps is not necessarily limiting.

Step 1: Alice (and Bob) perform point-to-point QKD with $N_1$ (and $N_m$) to share a secret key $P_{0,1}$ (and $P_{m,m+i}$) respectively.

Step 2: Alice, i.e., $N_0$, runs TF/MDI QKD with $N_2$ to share a secret key $K_{0,2}$. Similarly, for $1 \leq i \leq m -1$, each $N_i$ performs TF/MDI QKD with $N_{i+2}$ to share a secret key $K_{i,i+2}$. It should be noted how each node has two secret keys and at least one of them is not known to its immediate neighbor, i.e., the node(s) directly connected to itself.

Step 3: Alice draws a sequences of n uniformly random bits to generate a secret key $X_A \in \{0,1\}^n$. Alice then performs an XOR operation to $X_A$ with its secret keys to produce the message $M_0 = X_A \oplus P_{0,1} \oplus K_{0,2}$. Alice sends $M_0$ to the next node $N_1$.

Step 4: It should be noted that $N_1$ cannot retrieve $X_A$ because it does not know $K_{0,2}$. Then $N_1$ again performs an XOR operation to $M_0$ with its secret keys to generate the new message $M_1 = M_0 \oplus P_{0,1} \oplus K_{1,3} = X_A \oplus K_{0,2} \oplus K_{1,3}$ and forwards it to the next node $N_2$. With this operation, $N_1$ decrypts the received message $M_0$ with key $P_{0,1}$ and encrypts it with $K_{1,3}$.

Step 5: For $1 \leq i \leq m -1$, each $N_i$ receives from $N_{i-1}$ the message $M_i = X_A \oplus K_{i-2,i} \oplus K_{i-1,i+1}$. Then, $N_i$ performs an XOR operation to $M_{i-1}$ with its secret key(s) to generate the new message $M_i = M_{i-1} \oplus K_{i-2,i} \oplus K_{i,i+2} = X_A \oplus K_{i-1,i+1} \oplus K_{i,i+2}$ and forwards it to the next node $N_{i+1}$. $N_i$ decrypts the received message with the key $K_{i-2,i}$ and encrypts it with $K_{i,i+2}$.

Step 6: $N_m$ receives the message $M_{m-1} = X_A \oplus K_{m-2,m} \oplus K_{m-1,m+1}$ from $N_{m-1}$. $N_m$ performs an XOR operation with its secret key(s) to generate the new message $M_m = X_A \oplus K_{m-1,m+1} \oplus P_{m,m+1}$ and forwards it to Bob ($N_{m+1}$). As before, $N_m$ decrypts the received message $M_{m-1}$ with the key $K_{m-2,m}$ and encrypts it with $P_{m,m+1}$.

Step 7: Bob receives $M_m = X_A \oplus K_{m-1,m+1} \oplus P_{m,m+1}$ from $N_m$. Then, Bob can perform an XOR operation with its secret keys to decrypt the message to retrieve $X_A$. Thereby, Alice and Bob share the secret key $K(A) = X_A$ for further communication (which may be communication via a classical channel).

In the above scheme, Alice (and Bob) uses its two secret keys for encryption (and decryption) and all the other intermediary nodes use one for encryption and one for decryption. In each forwarding step, an intermediary node receives a message where $X_A$ is encrypted with two secret keys. The node knows only one of them, so it cannot retrieve $X_A$. With its two secret keys, the intermediary node removes one of them and adds a new secret key to protect $X_A$ from the succeeding node. Then the new message is forwarded to the next node, where the same operation repeats again until the message reaches Bob.

According to the present disclosure, a key forwarding scheme is presented, e.g., for QKD systems, for distances that are larger than a transport distance of photons in fiber (e.g., ca. 100km). In conventional key forwarding schemes, Alice's random number may be encrypted/decrypted via QKD keys and transmitted from one QKD node to the next QKD node. However, in such known schemes, the random number may be exposed at the intermediate nodes of the QKD infrastructure. However, according to the present disclosure, the random number (or the "message") may remain encrypted with at least one cryptographic context (or key) at each node. In other words, none of the nodes (except for Alice and Bob) may be able to completely decrypt the message, but only to partially decrypt and re-encrypt the message.

Fig. 4 depicts a system component view of the communication network 100 of Fig. 1 for discussing which circuitry may be present in each node. It should be noted that "middle" nodes N2 and N3 may have the same elements. Moreover, Alice and Bob (Alice1 and Bob4, in Fig. 1) have the same elements and N1 and N4 have the same elements and a repetitive description of nodes with the same elements is omitted. Therefore, the description given for Alice likewise applies to Bob, the description given for N1 likewise applies to N4, and the description given for N2 likewise applies to N3.

In general, end nodes and intermediate nodes may include quantum and classical communication equipment. All nodes may have in common that they include a KMS (Key Management System), at least one Q Source (Quantum (Photonic) Source - e.g., for emitting a weak laser beam or single photons), and a classical network connection, e.g., for key sifting and key forwarding (from the own KMS to neighbor KMS) or for applying the present disclosure as a classical key forwarding scheme.

A KMS may be used to store the distributed QKD encryption keys safely. The KMS may take over the responsibility for the key forwarding process as outlined in the present disclosure. To do so, the KMS may require a (quantum) random number generator ((Q)RNG) and a secure database for the key storage, e.g., based on a Hardware Security Module (HSM) or based on a Physical Unclonable Function (PUF).

The quantum photonic source may include a laser configured to emit a weak laser beam (for TF QKD) or circuitry (e.g., including a laser and other optical elements) to act as a single photon source (for MDI QKD). The photon source(s) may operate on different frequencies to better incorporate them into a quantum photonic network setup.

Furthermore, each node that serves as a relay for relay-assisted QKD (e.g., each intermediate node N1 to N4) may be configured to perform a BSM (Bell State Measurement) to determine a Bell state of two entangled particles. BSM circuitry (or device) may include a beam splitter and (several) single photon detectors. BSM circuitry for a TF QKD scheme may include two (S)NSPDs ((superconducting) nanowire single photon detectors), while BSM circuitry for an MDI QKD scheme (e.g., with polarization encoded qubits) may include up to four SNSPDs (or even more).

In more detail, Alice includes circuitry for implementing a KMS and a database, as well as circuitry for performing classical network communication. Furthermore, Alice includes a first quantum source (of a first frequency f1) for relay-assisted QKD with N2 (via N1), and a second quantum source (of a second frequency f2) for P2P QKD with N1. Alice further includes a (Q)RNG. However, Alice (and Bob) does not need detection circuitry, such as an SNSPD or BSM circuitry. Thus, the key forwarding scheme (and the nodes) may be easily integrated into any existing endpoints (that may be additionally equipped with photon sources), e.g., based on integrated optics.

N1 includes a KMS and circuitry for performing classical network communication. Furthermore, N1 incudes BSM circuitry for acting as a Charly in the relay-assisted QKD between Alice and N2. N1 further includes an SNSPD for the P2P QKD with Alice. N1 also includes a quantum source (of a third frequency f3, but the present disclosure is not limited in that regard) for relay-assisted QKD with N3 (via N2).

N2 includes a KMS and circuitry for performing classical network communication. Furthermore, N2 incudes BSM circuitry for acting as a Charly in the relay-assisted QKD between N1 and N3. N2 further includes two quantum sources (of the first frequency f1): a first one for the relay-assisted QKD with Alice and a second one for the relay-assisted QKD with N4.

As stated above, N3 may have the same components as N2, but it should be noted that the quantum sources of N3 may emit a different light frequency (f3 in this example) than the quantum sources of N2. Furthermore, N3 may include an SNSPD. Also, the quantum source of N4 may emit a different frequency (f1 in this example, but it may also be another frequency f4) than the quantum source of N1 (f3 in this example). Furthermore, Bob may have three different quantum sources and no random number generator (in contrast to Alice), but the present disclosure is not limited in that regard and Alice and Bob may have the same elements, as described above.

The key forwarding scheme as described herein may be deployed by each KMS based on the classical (transport) network connection. The required QKD keys may be sifted by the QKD systems and transferred to the respective next KMS in the sequence, where they may be stored in a secure key storage (e.g., a safe database) for later use.

During the key forwarding process, Alice may generate a random number using its local QRNG. The random number may be handed over to the local KMS, where the key forwarding of the present disclosure may be initiated. The KMS may further store the random number as encryption key in its local key storage system.

Bob may receive and decode the signal sent from Alice during the key forwarding scheme of the present disclosure and store the received random number as encryption key in its local key storage system. For example, additionally, Alice and Bob may also use an identifier to be stored together with the key, such as a random number identifier (RNDID) in accordance with the ETSI-014 protocol.

Applications on Alice and Bob's side may retrieve the same encryption key from their local key storage systems on both sides and use it to create a symmetrical, quantum-secure encrypted communication channel between them (e.g., based on the standardized ETSI-QKD004 protocol or ETSI-QKD014 protocol).

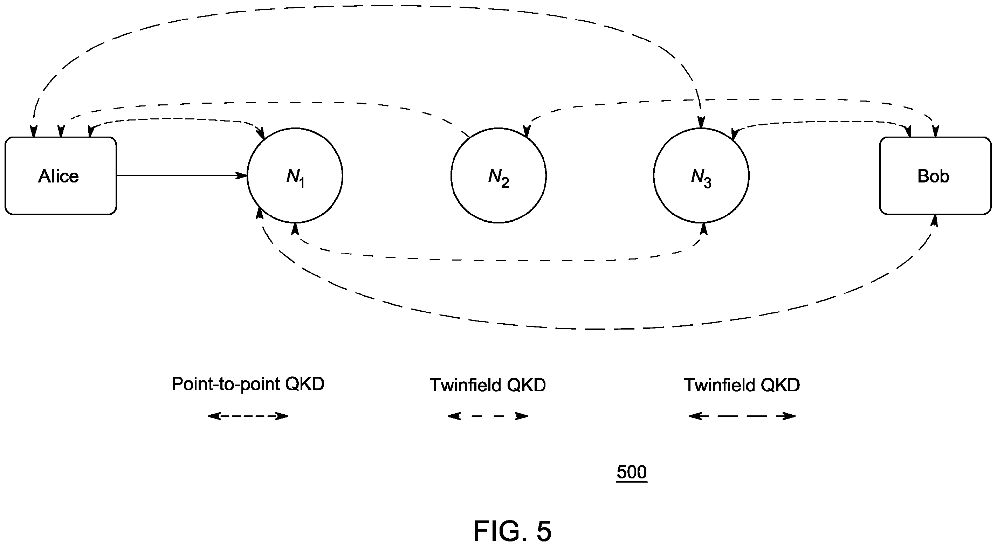

In some examples, the second network node is a direct neighbor of the first network node, and the third network node is an indirect neighbor of the first network node and of the second network node. Such an example is discussed in the following under reference of Fig. 5.

Fig. 5 depicts a further key forwarding scheme 500 according to the present disclosure in which relay-assisted QKD (TF-QKD in Fig. 5, but the present disclosure is not limited in that regard) is carried out with a further node that is separated from the first network node (Alice) by two nodes (instead of only one node, as discussed above). Also in this embodiment, the principle applies that a direct neighbor may only have access to at most one of two cryptographic contexts.

In this example, Alice carries out P2P QKD with N1 and TF QKD (or MDI QKD) with N2 and with N3. N1 carries out TF-QKD with N3 and with Bob. Accordingly, Bob, carries out P2P QKD with N3, and TF QKD with N1 and N2. The following table depicts the contents of a (classical) message that is sent from a sender to a receiver. The notation is similar as above, but in this example, the index of Alice is A and the index of Bob is B. For example, the key $P_{A,1}$ refers to a P2P QKD key between Alice and N1 and $K_{B,1}$ refers to a TF QKD key between Bob and N1.

| Sender | Receiver | Content | Message name |
|--------|----------|---------|--------------|
| Alice | $N_1$ | $X_A \oplus P_{A,1} \oplus K_{A,2 \, \Phi} \, K_{A,3}$ | $M_0$ |
| $N_1$ | $N_2$ | $X_A \oplus K_{A,2} \oplus K_{A,3} \oplus K_{1,3} \oplus K_{B,1}$ | $M_1$ |
| $N_2$ | $N_3$ | $X_A \oplus K_{A,3} \oplus K_{1,3} \oplus K_{B,1} \oplus K_{B,2}$ | $M_2$ |

(continued)

| Sender | Receiver | Content | Message name |
|--------|----------|---------|--------------|
| $N_3$ | Bob | $X_A \oplus K_{B,1} \oplus K_{B,2} \oplus P_{B,3}$ | $M_3$ |

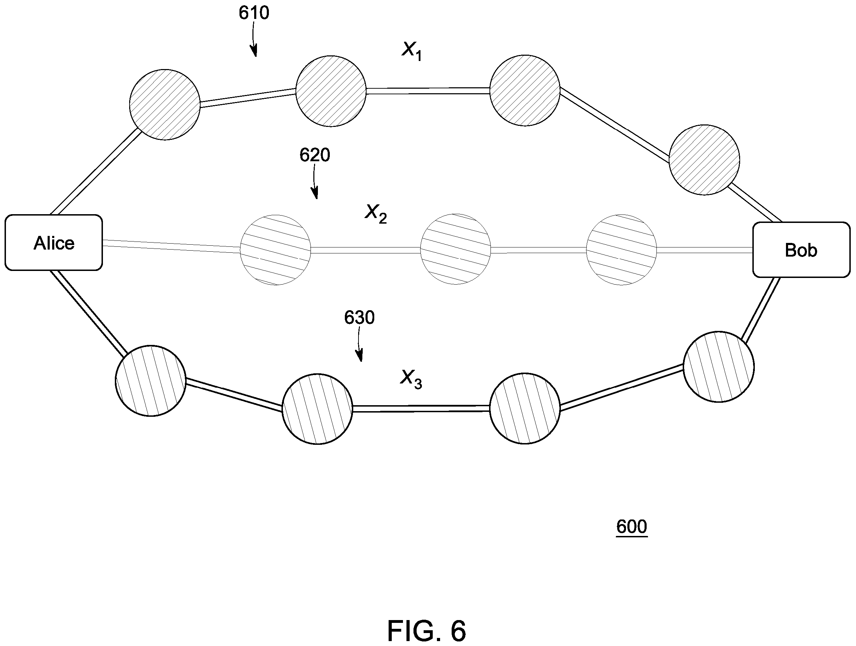

Such an example may be employed when the distance (physical links) between Alice and N3 (as well as Bob and N1) are short enough to perform TF QKD between nodes that are t nodes apart or less (for a suitable positive integer t>1). For the sake of simplicity, only one path between Alice and Bob is considered, but it may be generalized to M paths (which may also be the case for the other examples discussed herein, as will be apparent from Fig. 6). Furthermore, m intermediate nodes may be considered. In the following, Alice will be referred to as $N_0$ and Bob as $N_{m+1}$:

Step 1: No perform P2P QKD with $N_1$, obtaining key Po,,. $N_{m+1}$ does the same with $N_m$, obtaining key $P_{m,m+1}$.

Step 2: For $i \in \{1, ..., m\}$, let $I = \min (i - t, 0)$ and $J = \max (i + t, m)$. $N_i$ performs independent TF QKD exchanges with nodes $N_r$ such that $r \in \{I, ..., J\}$ and $|r - i| \geq 2$. After all the key exchanges (including the P2P QKD), let $S_i$ denote the set of all keys known to $N_i$, for $i \in \{0, ..., m + 1\}$.

Step 3: $N_0$ draws a uniformly random bitstring $X_A$ of length n bits. Define $M_{-1} := X_A$. For $i \in \{0, ..., m\}$, $N_i$ receives the Message $M_{i-1}$ and computes $M_{i-1} \oplus \bigoplus_{k \in S_i} k$. It should be noted that the double concatenation or double XORing may indicate that all keys in the set $S_i$ may be XORed together. Then, the result of that may be XORed with $M_{i-1}$.

Step 4: $N_{m+1}$ receives $M_m$ from $N_m$ and outputs $K(B) = M_m \oplus \bigoplus_{k \in S_{m+1}} k$

In some examples, the first network node (if it is Alice1 in Fig. 1 or Alice in any of Figs. 3 to 5) is connected to at least two directly neighboring nodes. Thereby, at least two paths are provided to communicate the message to the recipient of the message (i.e., Bob4 in Fig. 1).

Such an example is discussed in the following under reference of Fig. 6, which depicts a communication network 600 that exemplarily includes three (parallel) paths 610, 620, 630, to exchange three random numbers X1, X2, and X3 between Alice and Bob. Each path may correspond to the communication networks discussed under reference of Figs. 1 to 5. However, it should be noted that each path may be implemented differently. For example, as can be taken from Fig. 6, path 620 only has three nodes while paths 610 and 630 have four nodes (apart from Alice and Bob which are common to each path). Further nodes may be adopted in each path, as well, in some examples. In another example, at least one of the paths may adopt a key forwarding scheme as discussed under reference of Fig. 1, and another path may adopt a key forwarding scheme as discussed under reference of Fig. 5. However, in some examples, all paths may employ the same key forwarding scheme.

Such a configuration may be used to further increase resilience of the network (or the key forwarding scheme) with respect to malicious network nodes. In other words, Fig. 6 depicts a multipath generalization with three disjoint. Each path may allow Alice and Bob to exchange secret bitstrings X1, X2 and X3.

For a total number of M paths , each path may include a sequence of independent nodes. Alice and Bob may run M instances of the scheme described herein, each on one path and with uniformly random input $X_i \in_R \{0,1\}^n$. Finally, they may distill a secret key $K(A) = K(B) = \bigoplus_{i=1}^{M} X_i$ (e.g., based on an XORing of all M keys, based on a key derivation function (KDF), or the like). To leak the key, M pairs of adjacent nodes from each path may need collaborate, for a total of 2M colluding parties. The availability of such disjoint paths may be topology dependent. One may investigate the most common network topologies to investigate realistic values for M. In most practical scenarios, M might be at least two. This may be because network operators may benefit from having more than a single path between two endpoints, as redundancy in the path number may be beneficial for orthogonal reasons (e.g., resilience).

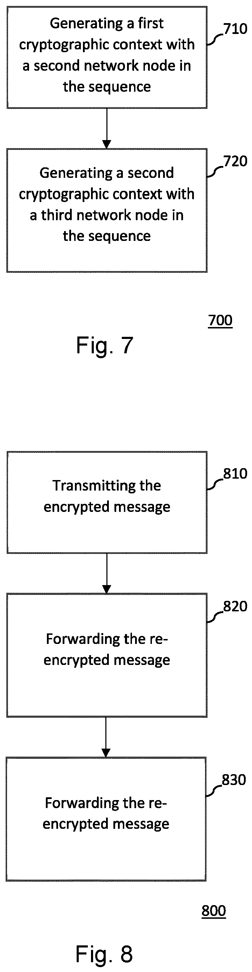

Fig. 7 depicts a flowchart of a method 700 for a first network node communicating in a sequence of network nodes in a network. The method 700 includes generating, 710, a first cryptographic context with a second network node in the sequence. The method 700 further includes generating, 720, a second cryptographic context with a third network node in the sequence. As discussed herein, with respect to the first network node, a directly neighboring network node has access to at most one of the first and the second cryptographic contexts.

Fig. 8 depicts a flowchart of a method 800 for a communication network. The communication network includes a network node that generates a message (i.e., Alice), a network node that is a direct neighbor to Alice (i.e., N1), an intermediate network node (i.e., N2, N3, or N4), and a network node that is intended to receive the message (i.e., Bob). The method includes transmitting, 810, the encrypted message from the network node that generates the message (Alice) to its directly neighboring network node (N1). The method further includes forwarding, 820, the re-encrypted message of the directly neighboring network node (N1) to the intermediate network node (N2, N3, or N4). The method further includes forwarding, 830, the re-encrypted message of the intermediate network node to the network node that is the intended recipient of the message (Bob). For example, Bob may (fully) decrypt the message based on the two cryptographic contexts that it is aware of.

According to the present disclosure, at least the following effects may be achieved:

A key forwarding scheme of the present disclosure may fulfill security requirements that may be needed for safe key forwarding, such as no plaintext of the key (or the message) may be available at an intermediate node, without having the need that "all nodes must be secure" (if one is lost, the entire security system is lost) and "all nodes must be trusted" (or all must play according to the rules).

No trusted nodes: Intermediate nodes need not be subject to "dedicated trust". The application of the present disclosure might not expose any cryptographic artifact on the intermediate nodes, thus significantly reducing the trust requirements on a "state-of-the-art trusted QKD node chain". In other words: no trustworthy information stays unencrypted on any intermediate node.

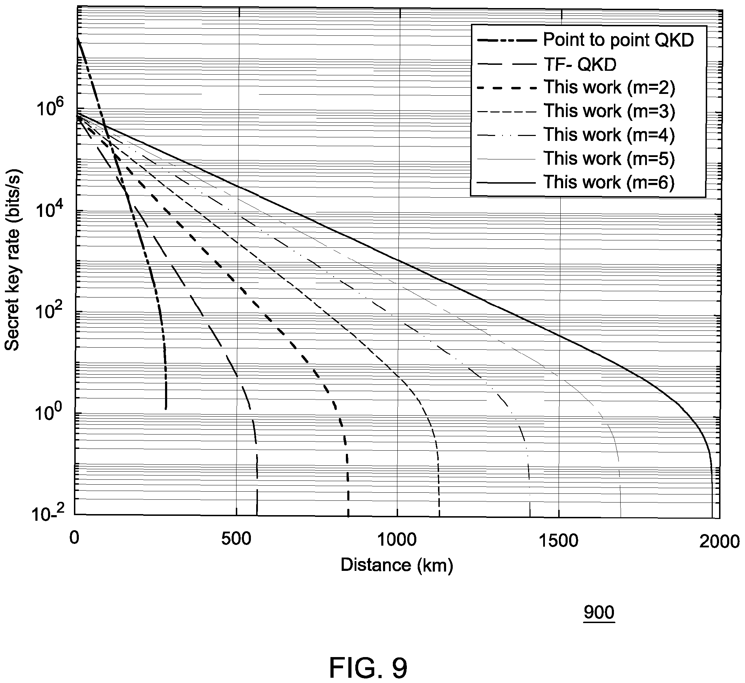

Performance: High key rate across the chain of intermediate nodes. The key rate across the chain of QKD nodes may depend on the rate of the slowest QKD link. Figure 9 depicts a graph 900 showing a simulation of the achievable QKD rates vs. line length (or distance). In Fig. 9, P2P QKD and TF QKD is compared to the application of the present disclosure ("This work") with different numbers m of equidistant nodes that are used (apart from Alice and Bob).

Resilience: The scheme (or protocol) may be resilient to cheating/eavesdropping by individual intermediate QKD nodes. Malicious network nodes may become a more significant threat to large scale network deployments, because intrusion management may be challenging. It might not even be possible to become aware that a network node is compromised and intruders are active on the system. However, according to the present disclosure, the scheme may be secure as long as two neighboring nodes in the QKD chain are secure. The scheme may tolerate the loss of one trusted QKD entity along the chain while remaining secure.

Cost efficiency: No quantum communication receiving equipment may be necessary at the QKD end nodes. Quantum communication equipment may be expensive (e.g., several 10k€ per equipment) and complex to integrate into existing communication network nodes. The disclosed method may achieve the effect that the sending and receiving classical communication nodes (Alice and Bob) may not require any quantum communication receiving equipment, hence no expensive single photon detection systems or other circuitry. The end nodes may only use sending equipment. In case of TF-QKD, using weak laser beam, traditional classical sender equipment may even be reused.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F) PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

# EP 4 749 987 A1

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A first network (Alice1, N1, N2, N3, N4, Bob4) node communicating in a sequence of network nodes in a network (100; 600), the first network node (Alice1, N1, N2, N3, N4, Bob4) comprising circuitry configured to:

    generate a first cryptographic context with a second network node (Alice1, N1, N2, N3, N4, Bob4) in the sequence;
    generate a second cryptographic context with a third network node (Alice1, N1, N2, N3, N4, Bob4) in the sequence;
    wherein, with respect to the first network node (Alice1, N1, N2, N3, N4, Bob4), a directly neighboring network node (Alice1, N1, N2, N3, N4, Bob4) has access to at most one of the first and the second cryptographic contexts.

2. The first network node (Alice1, N1, N2, N3, N4, Bob4) of claim 1, wherein at least one of the first and the second cryptographic contexts is generated based on relay-assisted quantum key distribution.

3. The first network node (Alice1) of claim 1 or 2, wherein the circuitry is further configured to:

    generate a message ($X_A$) and encrypt the message based on the first cryptographic context ($P_{0,1}$) and the second cryptographic context ($K_{0,2}$); and
    communicate the encrypted message ($M_0$) to the second network node (N1).

4. The first network node (Alice1) of claim 3, wherein

    the first cryptographic context ($P_{0,1}$) is based on a point-to-point quantum key distribution with the second network node (N1),
    and wherein the second cryptographic context ($K_{0,2}$) is based on a relay-assisted quantum key distribution with the third network node (N2).

5. The first network node (Alice1) of claim 4, wherein, for generating the second cryptographic context ($K_{0,2}$), the second network node (N1) serves as a relay for the relay-assisted quantum key distribution between the first network node (Alice1) and the third network node (N2).

6. The first network node (Bob4) of claim 1 or 2, wherein the circuitry is further configured to:

    receive, from the second network node (N4, $N_m$), a message ($M_m$) that is encrypted based on the first cryptographic context ($P_{m,m+1}$) and the second cryptographic context ($K_{m-1,m+1}$), and
    decrypt the message ($M_m$) based on the first cryptographic context ($P_{m,m+1}$) and the second cryptographic context ($K_{m-1,m+1}$).

7. The first network node (Bob4) of claim 6, wherein the first cryptographic context ($P_{m,m+1}$) is based on a point-to-point quantum key distribution with the second network node (N4, $N_m$),
and wherein the second cryptographic context ($K_{m-1,m+1}$) is based on a relay-assisted quantum key distribution with the third network node (N3) in the sequence.

8. The first network node (Bob4) of claim 7, wherein, for generating the second cryptographic context ($K_{m-1,m+1}$), the second network node (N4, $N_m$) serves as a relay for the relay-assisted quantum key distribution between the first network node (Bob) and the third network node (N3).

9. The first network node (N1) of claim 1 or 2, wherein the circuitry is further configured to:

13

receive, from the second network node (Alice1), an encrypted message ($M_0$) that is encrypted based on the first cryptographic context ($P_{0,1}$) and based on a further cryptographic context ($K_{0,2}$),
wherein the first cryptographic context ($P_{0,1}$) is based on a point-to-point quantum key distribution between the first network node (N1) and the second network node (Alice1), and
wherein
the second cryptographic context ($K_{1,3}$) is based on a relay-assisted quantum key distribution with the third network node (N3), wherein the third network node (N3) is an indirect neighbor of the first network node (N1).

10. The first network node (N1) of claim 9, wherein the circuitry is further configured to:

decrypt the encrypted message ($M_0$) only based on the first cryptographic context ($P_{0,1}$) to obtain the message encrypted based on the further cryptographic context ($K_{0,2}$);
re-encrypt the message based on the second cryptographic context ($K_{1,3}$) to obtain the encrypted message ($M_1$) based on the second cryptographic context ($K_{1,3}$) and the further cryptographic context ($K_{0,2}$).

11. The first network node (N2) of claim 1 or 2, wherein the circuitry is further configured to:

receive, from a fourth network node (N1), an encrypted message ($M_1$) that is encrypted based on the first cryptographic context ($K_{0,2}$) and based on a further cryptographic context ($K_{1,3}$),
wherein the first cryptographic context ($K_{0,2}$) is based on a relay-assisted quantum key distribution with the second network node (Alice1), and wherein
the second cryptographic context ($K_{2,4}$) is based on a relay-assisted quantum key distribution with the third network node (N4).

12. The first network node (N2) of claim 11, wherein the circuitry is further configured to:

decrypt the encrypted message (M1) only based on the first cryptographic context ($K_{0,2}$) to obtain the message encrypted based on the further cryptographic context ($K_{1,3}$); and
re-encrypt the message based on the second cryptographic context ($K_{2,4}$) to obtain the encrypted message ($M_2$) based on the second cryptographic context ($K_{2,4}$) and the further cryptographic context ($K_{1,3}$).

13. The first network node (N2) of claim 11 or 12, wherein the fourth network node (N1) serves as a relay for the relay-assisted quantum key distribution between the first network node (N2) and the second network node (Alice1).

14. A communication network (100; 600) comprising a network node (Alice1) according to any one of claims 3 to 5, a network node (N1) according to any one of claims 9 or 10, a network node (N2) according to any one of claims 11 to 13, and a network node (Bob4) according to any one of claims 6 to 8.

15. The communication network (600) of claim 14, wherein the communication network node (Alice1) according to any one of claims 3 to 5 is connected to at least two directly neighboring nodes (N1) according to any one of claims 9 or 10, thereby providing at least two paths to communicate the message to the network node (Bob4) according to any one of claims 6 to 8.

**Amended claims in accordance with Rule 137(2) EPC.**

1. A first network node (Alice1, N1, N2, N3, N4, Bob4) communicating in a sequence of network nodes in a network (100; 600), the first network node (Alice1, N1, N2, N3, N4, Bob4) comprising circuitry configured to:

generate a first cryptographic context with a second network node (Alice1, N1, N2, N3, N4, Bob4) in the sequence;
generate a second cryptographic context with a third network node (Alice1, N1, N2, N3, N4, Bob4) in the sequence;
wherein, with respect to the first network node (Alice1, N1, N2, N3, N4, Bob4), a directly neighboring network node (Alice1, N1, N2, N3, N4, Bob4) has access to at most one of the first and the second cryptographic contexts, wherein at least one of the first and the second cryptographic contexts is generated based on relay-assisted quantum key distribution.

2. The first network node (Alice1) of claim 1, wherein the circuitry is further configured to:

generate a message ($X_A$) and encrypt the message based on the first cryptographic context ($P_{0,1}$) and the second cryptographic context ($K_{0,2}$); and
communicate the encrypted message ($M_0$) to the second network node (N1).

3. The first network node (Alice1) of claim 2, wherein

the first cryptographic context ($P_{0,1}$) is based on a point-to-point quantum key distribution with the second network node (N1),
and wherein the second cryptographic context ($K_{0,2}$) is based on a relay-assisted quantum key distribution with the third network node (N2).

4. The first network node (Alice1) of claim 3, wherein, for generating the second cryptographic context ($K_{0,2}$), the second network node (N1) serves as a relay for the relay-assisted quantum key distribution between the first network node (Alice1) and the third network node (N2).

5. The first network node (Bob4) of claim 1, wherein the circuitry is further configured to:

receive, from the second network node (N4, $N_m$), a message ($M_m$) that is encrypted based on the first cryptographic context ($P_{m,m+1}$) and the second cryptographic context ($K_{m-1,m+1}$); and
decrypt the message ($M_m$) based on the first cryptographic context ($P_{m,m+1}$) and the second cryptographic context ($K_{m-1,m+1}$).

6. The first network node (Bob4) of claim 5, wherein the first cryptographic context ($P_{m,m+1}$) is based on a point-to-point quantum key distribution with the second network node (N4, $N_m$),
and wherein the second cryptographic context ($K_{m-1,m+1}$) is based on a relay-assisted quantum key distribution with the third network node (N3) in the sequence.

7. The first network node (Bob4) of claim 6, wherein, for generating the second cryptographic context ($K_{m-1,m+1}$), the second network node (N4, $N_m$) serves as a relay for the relay-assisted quantum key distribution between the first network node (Bob) and the third network node (N3).

8. The first network node (N1) of claim 1, wherein the circuitry is further configured to:

receive, from the second network node (Alice1), an encrypted message ($M_0$) that is encrypted based on the first cryptographic context ($P_{0,1}$) and based on a further cryptographic context ($K_{0,2}$),
wherein the first cryptographic context ($P_{0,1}$) is based on a point-to-point quantum key distribution between the first network node (N1) and the second network node (Alice1), and wherein
the second cryptographic context ($K_{1,3}$) is based on a relay-assisted quantum key distribution with the third network node (N3), wherein the third network node (N3) is an indirect neighbor of the first network node (N1).

9. The first network node (N1) of claim 8, wherein the circuitry is further configured to:

decrypt the encrypted message ($M_0$) only based on the first cryptographic context ($P_{0,1}$) to obtain the message encrypted based on the further cryptographic context ($K_{0,2}$);
re-encrypt the message based on the second cryptographic context ($K_{1,3}$) to obtain the encrypted message ($M_1$) based on the second cryptographic context ($K_{1,3}$) and the further cryptographic context ($K_{0,2}$).

10. The first network node (N2) of claim 1, wherein the circuitry is further configured to:

receive, from a fourth network node (N1), an encrypted message ($M_1$) that is encrypted based on the first cryptographic context ($K_{0,2}$) and based on a further cryptographic context ($K_{1,3}$),
wherein the first cryptographic context ($K_{0,2}$) is based on a relay-assisted quantum key distribution with the second network node (Alice1), and wherein
the second cryptographic context ($K_{2,4}$) is based on a relay-assisted quantum key distribution with the third network node (N4).

11. The first network node (N2) of claim 10, wherein the circuitry is further configured to:

decrypt the encrypted message (M1) only based on the first cryptographic context ($K_{0,2}$) to obtain the message encrypted based on the further cryptographic context ($K_{1,3}$); and

re-encrypt the message based on the second cryptographic context ($K_{2,4}$) to obtain the encrypted message ($M_2$) based on the second cryptographic context ($K_{2,4}$) and the further cryptographic context ($K_{1,3}$) and/or wherein the fourth network node (N1) serves as a relay for the relay-assisted quantum key distribution between the first network node (N2) and the second network node (Alice1).

12. A communication network (100; 600) comprising a network node (Alice1) according to any one of claims 2 to 4, a network node (N1) according to any one of claims 8 or 9, a network node (N2) according to any one of claims 10 or 11, and a network node (Bob4) according to any one of claims 5 to 7.

13. The communication network (600) of claim 12, wherein the communication network node (Alice1) according to any one of claims 2 to 4 is connected to at least two directly neighboring nodes (N 1) according to any one of claims 8 or 9, thereby providing at least two paths to communicate the message to the network node (Bob4) according to any one of claims 5 to 7.

14. A method for a first network node (Alice1, N1, N2, N3, N4, Bob4) communicating in a sequence of network nodes in a network (100; 600), the method comprising

generating a first cryptographic context with a second network node (Alice1, N1, N2, N3, N4, Bob4) in the sequence;

generating a second cryptographic context with a third network node (Alice1, N1, N2, N3, N4, Bob4) in the sequence;

wherein, with respect to the first network node (Alice1, N1, N2, N3, N4, Bob4), a directly neighboring network node (Alice1, N1, N2, N3, N4, Bob4) has access to at most one of the first and the second cryptographic contexts, wherein at least one of the first and the second cryptographic contexts is generated based on relay-assisted quantum key distribution.

15. A computer program including a program code to execute the method of claim 14, when the program is executed on a computer, processor or other programmable hardware component.

Fig. 1

Fig. 2

Fig. 3

300

$X_A \oplus P_{0,1} \oplus K_{0,2}$

$X_A \oplus K_{0,2} \oplus K_{1,3}$

$X_A \oplus K_{i-1,i+1} \oplus K_{i,i+2}$

$X_A \oplus K_{i,i+2} \oplus K_{i+1,i+3}$

$X_A \oplus K_{m-1,m+1} \oplus P_{m,m+1}$

$X_A$

Fig. 4

100

FIG. 5

500

FIG. 6

Generating a first cryptographic context with a second network node in the sequence 710

Generating a second cryptographic context with a third network node in the sequence 720

700

Fig. 7

Transmitting the encrypted message 810

Forwarding the re-encrypted message 820

Forwarding the re-encrypted message 830

800

Fig. 8

FIG. 9

EP 4 749 987 A1

Europäisches
Patentamt

European
Patent Office

Office européen
des brevets

# EUROPEAN SEARCH REPORT

**Application Number**

EP 24 21 5017

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/045855 A1 (YUAN ZHILIANG [GB] ET AL) 10 February 2022 (2022-02-10) | 1 | INV.<br>H04L9/08 |
| Y | * paragraph [0067] - paragraph [0087] *<br>* paragraph [0108] - paragraph [0109] *<br>* figures 1, 4 * | 2-15 | |
| X | US 2023/018829 A1 (CHO JOO YEON [DE] ET AL) 19 January 2023 (2023-01-19) | 1 | |
| Y | * paragraph [0058] - paragraph [0061] *<br>* figures 1, 2A, 2B, 3 * | 2-15 | |
| Y | CAO YUAN ET AL: "Hybrid Trusted/Untrusted Relay-Based Quantum Key Distribution Over Optical Backbone Networks",<br>IEEE JOURNAL ON SELECTED AREAS IN COMMUNICATIONS, IEEE SERVICE CENTER, PISCATAWAY, US,<br>vol. 39, no. 9, 9 March 2021 (2021-03-09), pages 2701-2718, XP011872577,<br>ISSN: 0733-8716, DOI: 10.1109/JSAC.2021.3064662<br>[retrieved on 2021-08-17]<br>* page 2703 - page 2711 * | 2-15 | |

**TECHNICAL FIELDS SEARCHED (IPC)**

H04L

The present search report has been drawn up for all claims

| Place of search | Date of completion of the search | Examiner |
|---|---|---|
| Munich | 22 April 2025 | Apostolescu, Radu |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................
& : member of the same patent family, corresponding
document

EPO FORM 1503 03.82 (P04C01)

**EP 4 749 987 A1**

## ANNEX TO THE EUROPEAN SEARCH REPORT
## ON EUROPEAN PATENT APPLICATION NO.

EP 24 21 5017

22-04-2025

| Patent document cited in search report | | Publication date | Patent family member(s) | | Publication date |
|---|---|---|---|---|---|
| US 2022045855 | A1 | 10-02-2022 | GB | 2581528 A | 26-08-2020 |
| | | | JP | 7021272 B2 | 16-02-2022 |
| | | | JP | 2020145672 A | 10-09-2020 |
| | | | US | 2020274701 A1 | 27-08-2020 |
| | | | US | 2022045855 A1 | 10-02-2022 |
| US 2023018829 | A1 | 19-01-2023 | EP | 4123957 A1 | 25-01-2023 |
| | | | US | 2023018829 A1 | 19-01-2023 |